# EUROPÄISCHE PATENTSCHRIFT

(11) **EP 4 188 636 B1**
(45) Veröffentlichungstag und Bekanntmachung des Hinweises auf die Patenterteilung: **24.09.2025**
(21) Anmeldenummer: 21752657.3
(22) Anmeldetag: 27.07.2021
(51) Int. Cl.: G02B 19/00, G02B 27/10, G02B 27/14, B23K 26/06, B23K 26/082, B23K 26/342, G02B 13/00

(54) **VORRICHTUNG ZUR ABTASTUNG EINER ZIELEBENE MIT MEHREREN LASERSTRAHLEN, INSBESONDERE ZUR LASERMATERIALBEARBEITUNG**
DEVICE FOR SCANNING A SURFACE WITH MULTIPLE LASER BEAMS, ESPECIALLY FOR LASER PROCESSING
DISPOSITIF POUR SCANNER UNE SURFACE AVEC PLUSIEURS FAISCEAUX LASER, SURTOUT POUR L'USINAGE PAR LASER

(30) Priorität: 27.07.2020 DE 102020119702
(43) Veröffentlichungstag der Anmeldung: 07.06.2023
(73) Patentinhaber: Fraunhofer-Gesellschaft zur Förderung der angewandten Forschung e.V., 80686 München (DE)
(72) Erfinder: WESTPHALEN, Thomas, 52074 Aachen (DE); TRAUB, Martin, 52074 Aachen (DE); NOTTRODT, Oliver, 52074 Aachen (DE)
(74) Vertreter: Gagel, Roland
(86) Internationale Anmeldenummer: PCT/EP2021/070972
(87) Internationale Veröffentlichungsnummer: WO 2022/023323

(56) Entgegenhaltungen:
- WO-A2-2009/108543
- DE-A1- 19 933 825
- JP-A- 2003 334 685
- US-A1- 2015 321 286
- US-B2- 9 616 522

## Beschreibung

### Technisches Anwendungsgebiet

Die vorliegende Erfindung betrifft eine Vorrichtung zur Abtastung einer Zielebene mit mehreren Laserstrahlen, insbesondere Bearbeitungslaserstrahlen zur Lasermaterialbearbeitung, wobei die Vorrichtung wenigstens zwei Laserstrahlquellen, für jede der Laserstrahlquellen eine Ablenkeinrichtung, die zur dynamischen Ablenkung eines von der jeweiligen Laserstrahlquelle emittierten Laserstrahls ausgebildet ist, und eine oder mehrere Fokussieroptiken zur Fokussierung der Laserstrahlen in die Zielebene aufweist.

Im Bereich der Lasermaterialbearbeitung ist die Prozessgeschwindigkeit durch unterschiedliche Einflüsse begrenzt. Zum einen kann der Bearbeitungsprozess selbst die Geschwindigkeit begrenzen. Dies ist beispielsweise beim Prozess des selektiven Laserschmelzens (LPBF: Laser Powder Bed Fusion) der Fall, bei dem die Umschmelzung eines Metallpulvers in der Praxis mit einer maximalen Geschwindigkeit von ca. 1 m/s erfolgen kann. Zum anderen kann auch die verfügbare Laserleistung oder die Trägheit des Strahlablenkungssystems die Prozessgeschwindigkeit begrenzen. Eine Steigerung der Prozessgeschwindigkeit ist jedoch gerade bei Einsatz der Lasermaterialbearbeitung im industriellen Umfeld sehr wichtig.

Ein weiteres Problem stellt der in der Regel große Bauraum der bei der Lasermaterialbearbeitung eingesetzten Strahlablenkungssysteme und Objektive im Verhältnis zum Abtastbereich bzw. Scanfeld und zum Spot-Durchmesser des Laserstrahls in der Zielebene dar. Typischerweise erfolgt die Strahlablenkung von Hochleistungs-Laserstrahlung durch zwei Spiegel mit Galvanometer-Antrieb. Die Fokussierung der Laserstrahlen in die Zielebene erfolgt in der Regel mittels Faserkollimator und F-Theta-Objektiv. Gerade bei Anwendungen, die einen kleinen Laserspot-Durchmesser und somit kurze Brennweiten und kurze Arbeitsabstände erfordern, verhindert der vergleichsweise große Bauraum der Objektive und Ablenkeinheiten eine Überlappung der Arbeitsbereiche der einzelnen Laserstrahlen.

### Stand der Technik

Der bisher bei der Lasermaterialbearbeitung verfolgte Ansatz besteht darin, die Prozessgeschwindigkeit durch Parallelisierung, also gleichzeitige Bearbeitung mit mehreren Laserstrahlen, zu erhöhen. Für diese Parallelisierung sind unterschiedliche Techniken bekannt.

So ist es beispielsweise bekannt, einen Laserstrahl durch Beugung an einem diffraktiven optischen Element (DOE) in mehrere Teilstrahlen aufzuspalten und über einen Scanner auf das Werkstück zu richten. Die Teilstrahlen können hierbei jedoch nicht getrennt voneinander räumlich und zeitlich moduliert werden, so dass die Anwendungsbandbreite dieser Technik begrenzt ist.

Im Rahmen des Integrationsprojektes FutureAM (https://www.futuream.fraunhofer.de) wird derzeit ein System mit fünf nebeneinander angeordneten Scan-Köpfen realisiert. Mit jedem Laserstrahl wird dabei ein bestimmter Bearbeitungsbereich in der Zielebene abgedeckt. Es soll ein möglichst großer Überlapp der Bearbeitungsbereiche der Laserstrahlen der einzelnen Scan-Köpfe erreicht werden. Das System enthält fünf Faserlaser, deren Laserstrahlung jeweils kollimiert und über je einen 2D-Galvanometer-Scanner und je ein F-Theta-Objektiv auf die Zielebene gerichtet wird. Durch geeigneten Umbau kommerzieller Scanner-Module wurde ein Mittenabstand von 85 mm zwischen den Scan-Köpfen erreicht. Die Bauform der Scanner-Module sowie der F-Theta-Linsen begrenzen jedoch den Überlapp, so dass maximal drei Scanner in einem Bereich von ca. 42 mm x 179 mm arbeiten können.

Die DE 19933825 A1 (welche die Basis für den Oberbegriff von Anspruch 1 bildet) beschreibt eine Laserbearbeitungsvorrichtung mit mehreren Laserstrahlquellen zur Erzeugung von Laserstrahlen unterschiedlicher Wellenlänge, eine Scannereinrichtung zur Verschiebung der relativen Strahlpositionen, die das Werkstück bewegt, und eine Strahlmischeinrichtung zum Angleichen der optischen Achsen. Über variable Spiegel, die ihre Krümmung verändern können, kann die Fokusposition der einzelnen Laserstrahlen entlang der Strahlachse verändert werden.

Die US 2015/0321286 A1 offenbart eine Vorrichtung zur Abtastung einer Zielebene mit mehreren Laserstrahlen gemäß dem Oberbegriff des Patentanspruches 1.

Bei der JP 2003/334685 A wird in einer Laserbearbeitungsvorrichtung eine Relay-Optik zur Überlagerung zweier Laserstrahlen eingesetzt. Die beiden Laserstrahlen werden dabei über Polarisationsstrahlteiler überlagert und mit einer gemeinsamen Fokussieroptik auf das Werkstück fokussiert.

Die WO 2009/108543 A2 beschreibt ein Belichtungssystem zur Auslösung einer Mehrphotonenreaktion in einem Harz. Dabei durchläuft ein Strahl nach Durchgang durch ein erstes Galvanometer zwei hintereinander geschaltete optische Relais, zwischen den ein zweites Galvanometer angeordnet ist. Das zweite Galvanomete ist am Innenbild des ersten optischen Relais positioniert, und auf diese Weise ist das Innenbild des ersten optischen Relais auch Gegenstand des zweiten optischen Relais.

Die Aufgabe der vorliegenden Erfindung besteht darin, eine Vorrichtung zum Abtasten einer Zielebene mit mehreren Laserstrahlen anzugeben, die einen vollständigen Überlapp der Abtastbereiche der einzelnen Laserstrahlen in der Zielebene ermöglichen.

### Darstellung der Erfindung

Die Aufgabe wird mit der Vorrichtung gemäß Patentanspruch 1 gelöst. Vorteilhafte Ausgestaltungen der Vorrichtung sind Gegenstand der abhängigen Patentansprüche oder lassen sich der nachfolgenden Beschreibung sowie den Ausführungsbeispielen entnehmen.

Die vorgeschlagene Vorrichtung weist wenigstens zwei Laserstrahlquellen, für jede der Laserstrahlquellen eine Ablenkeinrichtung zur dynamischen ein- oder zweidimensionalen Ablenkung eines von der jeweiligen Laserstrahlquelle emittierten Laserstrahls und eine oder mehrere Fokussieroptiken zur Fokussierung der Laserstrahlen in die Zielebene auf. Die Laserstrahlquellen sind so gewählt bzw. ausgebildet, dass die von den unterschiedlichen Laserstrahlquellen emittierten Laserstrahlen eine unterschiedliche Zentralwellenlänge aufweisen. Diese Laserstrahlen unterschiedlicher Zentralwellenlänge werden in der vorgeschlagenen Vorrichtung nach dem Durchtritt durch die Ablenkeinrichtung in einer Überlagerungsanordnung mittels einem oder mehreren auf die unterschiedlichen Zentralwellenlängen abgestimmten dichroitischen Spiegeln kombiniert.

Die Kombination erfolgt vorzugsweise derart, dass in einer Stellung der jeweiligen Ablenkeinrichtungen, im Folgenden auch als Nullstellung bezeichnet, alle Laserstrahlen durch die Überlagerungsanordnung vollständig überlagert werden, also bis zur Zielebene auf der optischen gleichen Achse verlaufen. Es ist auch möglich, dass die Laserstrahlen in einer derartigen Nullstellung der Ablenkeinrichtungen durch die Überlagerungsanordnung so kombiniert werden, dass sie in engem Abstand parallel zueinander durch die Fokussieroptik treten. Aufgrund der unabhängig voneinander steuerbaren Ablenkeinrichtungen und damit der unabhängig voneinander ablenkbaren Laserstrahlen tritt die vollständige Überlagerung oder auch Parallelität lediglich in einer bestimmten Stellung der jeweiligen Ablenkeinrichtungen auf. Die dichroitischen Spiegel der Überlagerungsanordnung stellen dabei Kantenfilter dar, deren Steilheit in Abhängigkeit der Wellenlängenunterschiede der jeweiligen Zentralwellenlängen der Laserstrahlen gewählt werden muss. Bei vorgegebener Kantensteilheit können auch die Abstände der Zentralwellenlängen geeignet gewählt werden. In einer Ausgestaltung liegen die unterschiedlichen Zentralwellenlängen der Laserstrahlquellen dabei innerhalb eines Wellenlängenbereiches Δλ von 200 nm, bevorzugt innerhalb eines Wellenlängenbereiches Δλ von 100 nm, besonders bevorzugt innerhalb eines Wellenlängenbereiches Δλ von 50 nm.

Die Laserstrahlen werden somit über Ablenkeinrichtungen dynamisch ein- oder zweidimensional abgelenkt und vorzugsweise über eine gemeinsame Fokussieroptik in die Zielebene fokussiert, wobei Laserstrahlen unterschiedlicher Zentralwellenlänge eingesetzt und spektral überlagert oder so kombiniert werden, dass sie durch die gemeinsame Fokussieroptik treten. Vorzugsweise werden dabei wenigstens zwei der Laserstrahlen voneinander beabstandet gleichzeitig über die Zielebene geführt.

Durch die vorgeschlagene Vorrichtung lässt sich der Abtastbereich bzw. das Scan-Feld der einzelnen Laserstrahlen in der Zielebene vollständig überlagern, wobei nach wie vor jeder Laserstrahl unabhängig von den anderen Laserstrahlen abgelenkt werden kann. Die Anzahl der Laserstrahlen, die mit der Vorrichtung eingesetzt werden können, hängt lediglich von den verfügbaren Laserstrahlquellen bzw. Zentralwellenlängen und den Möglichkeiten der Trennung durch entsprechende Kantenfilter ab. Es lassen sich bis zu zehn oder mehr Laserkanäle mit einem Überlapp der Arbeitsbereiche von 100% kombinieren. Vorzugsweise werden mindestens drei Laserstrahlen, insbesondere Bearbeitungslaserstrahlen zur Lasermaterialbearbeitung, eingesetzt bzw. kombiniert. Dadurch können Lasermaterialbearbeitungssysteme entsprechend skaliert und parallelisiert werden. Es ergibt sich unmittelbar eine deutliche Steigerung der Produktivität von Lasermaterialbearbeitungsprozessen, insbesondere bei Micro SLM, SLE und Stereolithographie.

Die Überlagerungsanordnung ist gleichzeitig als mehrere hintereinander angeordnete Relay-Optiken ausgebildet. Dadurch erzeugt ein durch die Ablenkeinrichtung erzeugter Ablenkwinkel einen kleineren Versatz senkrecht zur Strahlrichtung auf optischen Elementen, die sich in Strahlrichtung hinter der Überlagerungsanordnung befinden. Damit können größere Ablenkwinkel ohne Begrenzung durch die nachfolgenden optischen Elemente erzeugt werden.

Die bei der vorgeschlagenen Vorrichtung eingesetzten Laserstrahlquellen müssen für unterschiedliche Zentralwellenlängen verfügbar oder entsprechend einstellbar sein. Beispiele für derartige Laserstrahlquellen sind vor allem Diodenlaser, die bspw. als fasergekoppelte Module mit stabilisierten Zentralwellenlängen zwischen 800 und 1000 nm kommerziell verfügbar sind. Für Anwendungen, die kleine Spot-Durchmesser und somit eine hohe Strahlqualität erfordern, sind beispielsweise Ytterbium-Faserlaser eine geeignete Strahlquelle. Ytterbium-Faserlaser lassen sich in einem Bereich von 1000 - 1100 nm bei einer Bandbreite von ca. 5 nm oder weniger abstimmen und stabilisieren. Des weiteren lassen sich auch Ultra-Kurzpuls-Laser kombinieren, beispielsweise gepulste Ytterbium-Faserlaser. Bei Kurzpuls-Lasern ist die spektrale Verbreiterung zu beachten, die sich durch Fourier-Transformation aus dem kurzen Zeit-Signal ergibt. So weist ein Laserpuls mit einer Zentralwellenlänge von 1070 nm und einer Pulslänge von 100 fs eine spektrale Breite von ca. 17 nm auf. Dies ist bei der Wahl der Abstände der Zentralwellenlängen und der Wahl der dichroitischen Filter in der Überlagerungsanordnung zu berücksichtigen. Auch Strahlquellen mit vergleichsweise großem Abstand der Zentralwellenlängen lassen sich in der vorgeschlagenen Vorrichtung und dem vorgeschlagenen Verfahren kombinieren, beispielsweise Strahlquellen mit Zentralwellenlängen von 1064 nm und 532 nm.

Dichroitische Spiegel sind als dichroitische Kantenfilter mit einer Kantensteilheit von weniger als 1 nm technisch umsetzbar. Als Ablenkeinrichtungen kommen vorzugsweise 2D-Galvanometer-Scanner zum Einsatz. Selbstverständlich lassen sich die Ablenkeinrichtungen jedoch auch in anderer bekannter Weise, beispielsweise mittels in zwei Richtungen auslenkbaren Einzelspiegeln, realisieren.

Die vorgeschlagene Vorrichtung eignet sich für alle Anwendungen, bei denen eine Zielebene mit mehreren Laserstrahlen gleichzeitig abgetastet werden soll, deren Abtastbereiche einen möglichst großen Überlapp aufweisen sollen. Die vorgeschlagene Vorrichtung kann sehr vorteilhaft im Bereich der Lasermaterialbearbeitung eingesetzt werden, beispielsweise zum Laserschweißen, Schneiden, Bohren, Auftragsschweißen, SLM/LPBF, Mikro-LPBF, 3D-Druck, Markieren, Laserabtrag, bei der Stereolithographie, zum SLE oder ISLE. Auch im Bereich der Messtechnik wie beispielsweise dem LIDAR, der OCT oder der Pyrometrie ist die Vorrichtung einsetzbar.

### Kurze Beschreibung der Zeichnungen

Die vorgeschlagene Vorrichtung wird nachfolgend anhand von Ausführungsbeispielen in Verbindung mit den Zeichnungen nochmals näher erläutert. Hierbei zeigen.
Fig. 1 eine schematische Darstellung einer Anordnung zweier Scan-Köpfe für die Lasermaterialbearbeitung gemäß dem Stand der Technik;
Fig. 2 eine schematische Darstellung einer beispielhaften Ausgestaltung einer nicht erfindungsgemäßen Vorrichtung (Ablenkeinheiten in Nullposition);
Fig. 3 eine schematische Darstellung der Verhältnisse bei der Vorrichtung der Figur 2 mit unterschiedlicher Strahlablenkung;
Fig. 4 eine schematische Darstellung einer beispielhaften Realisierung einer nicht erfindungsgemäßen Überlagerungsanordnung der Vorrichtung als Relay-Optik;
Fig. 5 eine schematische Darstellung eines weiteren Beispiels einer nicht erfindungsgemäßen Überlagerungsanordnung der Vorrichtung als Relay-Optik;
Fig. 6 eine Darstellung der Wellenlängenabhängigen Transmission und Reflexion der beiden im Beispiel der Figur 5 eingesetzten dichroitischen Spiegel;
Fig. 7 eine schematische Darstellung einer beispielhaften Ausgestaltung der vorgeschlagenen Vorrichtung mit mehreren Relay-Optiken in Nullposition der Ablenkeinheiten;
Fig. 8 eine schematische Darstellung der Verhältnisse bei der Vorrichtung der Figur 7 mit unterschiedlicher Strahlablenkung;
Fig. 9 eine schematische Darstellung einer weiteren beispielhaften Ausgestaltung einer nicht erfindungsgemäßen Vorrichtung bei Vorfokussierung der Laserstrahlen; und
Fig. 10 eine schematische Darstellung der Zwischenfokuspunkte in den Bildebenen und der Prozessebene bei der Ausgestaltung der Figuren 7 und 8.

### Wege zur Ausführung der Erfindung

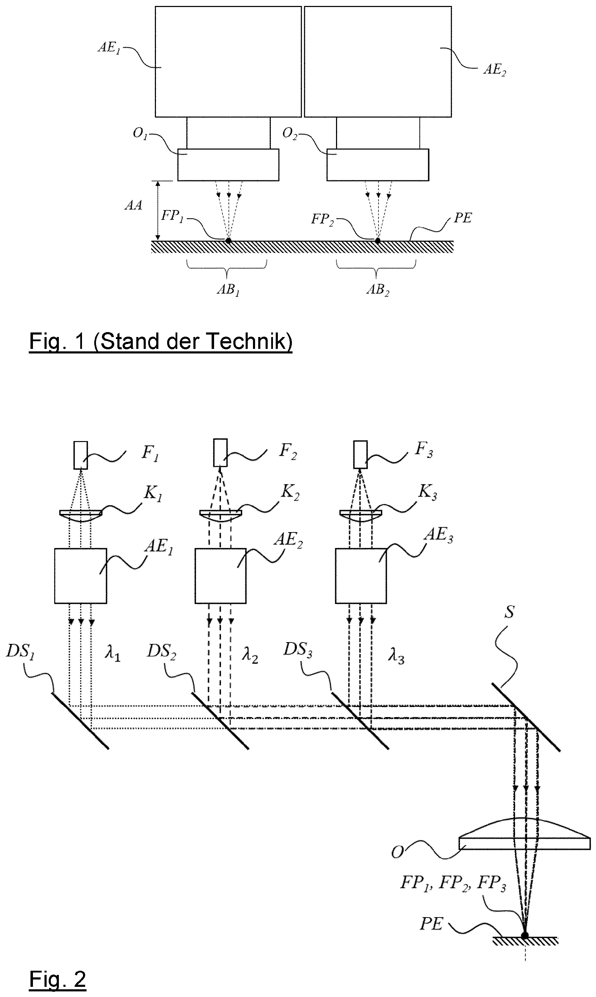

Bei bekannten Vorrichtungen zur Lasermaterialbearbeitung mit mehreren Laserstrahlen werden mehrere Laserscan-Köpfe mit entsprechenden Ablenkeinheiten AEᵢ für dynamische Strahlablenkung und Objektiven Oᵢ für die Fokussierung der Laserstrahlen in die Prozessebene PE nebeneinander angeordnet, wie dies in Fig. 1 schematisch angedeutet ist. Gerade bei Anwendungen, die einen kleinen Laserspot-Durchmesser FPᵢ und kurze Arbeitsabstände AA erfordern, wie dies beispielsweise beim Micro-SLM/LPBF der Fall ist, lässt sich dadurch ein Überlapp der Abtast- bzw. Arbeitsbereiche ABᵢ der einzelnen Laserstrahlen in der Prozessebene nicht erreichen.

Dieses Problem wird mit der vorgeschlagenen Vorrichtung, auch als Multi-Spektral-Scanner bezeichnet, dadurch gelöst, dass die Laserstrahlung mehrerer Strahlquellen mit unterschiedlicher Zentralwellenlänge zunächst abgelenkt, anschließend spektral kombiniert bzw. überlagert und letztlich über eine gemeinsame Fokussieroptik in die Prozessebene geführt wird. Dadurch lässt sich ein Überlapp der Abtast- bzw. Arbeitsbereiche ABᵢ von 100% für eine hohe Anzahl von Laserstrahlen bzw. Laserkanälen erreichen.

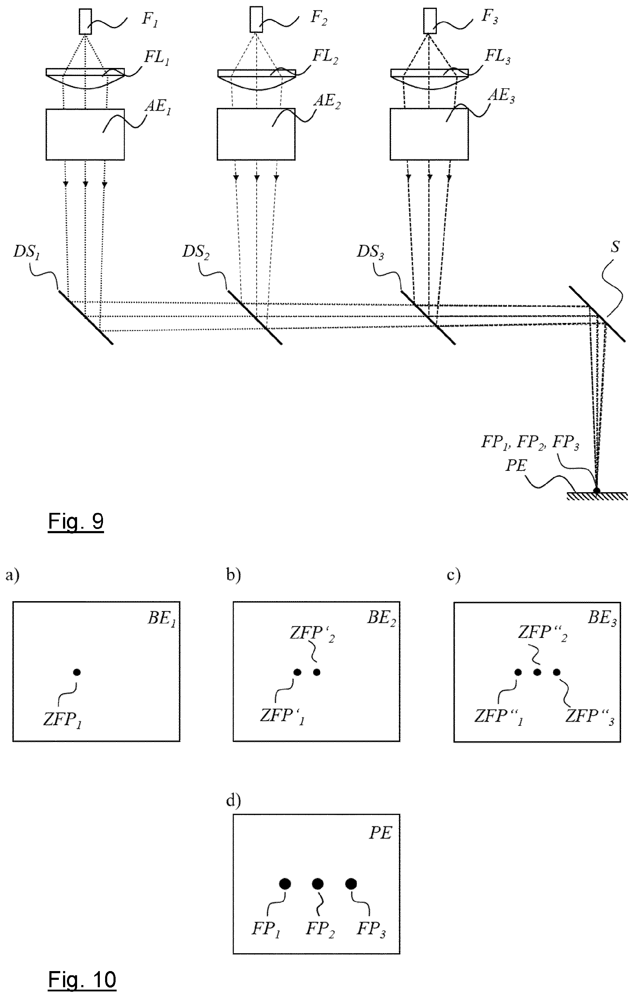

Die im Folgenden in Verbindung mit den Figuren 2 bis 6 und mit Figur 9 beschriebenen Ausführungsformen sind hinsichtlich der Überlagerungsanordnung nicht erfindungsgemäß und dienen lediglich der Veranschaulichung.

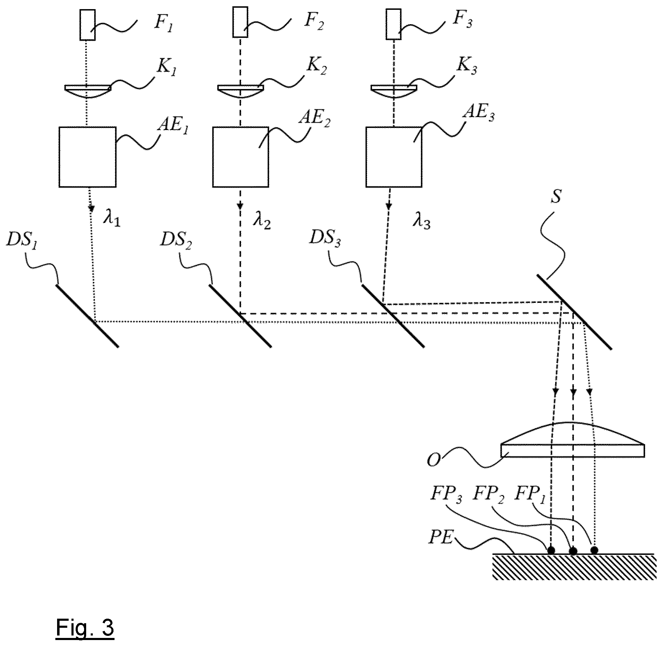

Eine beispielhafte Ausführungsform einer Vorrichtung zur Lasermaterialbearbeitung ist in den Figuren 2 und 3 schematisch dargestellt. In diesem Beispiel werden die Laserstrahlen von drei Laserquellen in die Prozessebene PE gerichtet. Die Vorrichtung ist selbstverständlich nicht auf diese Anzahl von Laserstrahlen bzw. Laserstrahlquellen begrenzt. Fig. 2 zeigt hierzu die Situation ohne eine Strahlauslenkung durch die Ablenkeinrichtungen AEᵢ (Nullposition). Die Laserstrahlung tritt aus den Fasern (oder Faserlasern) F₁, F₂ und F₃ aus und wird über die Kollimatoren Kᵢ kollimiert in die Ablenkeinheiten AEᵢ geführt. Die Strahlung muss hierbei nicht zwangsläufig über Fasern geführt werden. Auch eine Freistrahlkopplung oder ein direkter Strahlaustritt aus einem Laser, bspw. einem Diodenlaser, ist möglich. Die Ablenkeinheiten AEᵢ sind hier und in den anderen Figuren nur schematisch als Blöcke dargestellt. Die Laserstrahlung wird mit einer Überlagerungsanordnung aus in diesem Beispiel drei dichroitischen Spiegeln DSᵢ vollständig überlagert und über den Spiegel S und das Objektiv O in die Prozessebene PE abgebildet. Die dichroitischen Spiegel DSᵢ wirken als spektrale Kantenfilter mit einer möglichst steilen Bandkante, welche Strahlung bis zu einer Grenzwellenlänge transmittieren und Strahlung ab dieser Wellenlänge reflektieren. Ohne Strahlablenkung wird die Laserstrahlung der drei unterschiedlichen Strahlquellen in denselben Fokuspunkt FP = FP₁ = FP₂ = FP₃ in der Prozessebene PE abgebildet.

Fig. 3 zeigt den Strahlverlauf dieser Vorrichtung bei unterschiedlicher Strahlablenkung der Laserstrahlen durch die jeweiligen Ablenkeinheiten AEᵢ schematisch, hier nur anhand der optischen Achsen. Die Strahlung der verschiedenen Strahlquellen wird dann in die verschiedenen Fokuspunkte FP₁, FP₂ und FP₃ in der Prozessebene PE abgebildet, wie dies in Fig. 3 zu erkennen ist. In der Ausgestaltung der Figuren 2 und 3 muss der erste Spiegel DS₁ nicht notwendigerweise ein dichroitischer Spiegel sein. DS₁ kann in diesem Beispiel auch ein herkömmlicher Spiegel sein. Der Spiegel S kann gegebenenfalls entfallen oder durch einen 2D-Galvanometer-Scanner ersetzt werden, um gegebenenfalls den Abtast- bzw. Arbeitsbereich der Vorrichtung noch zu erhöhen.

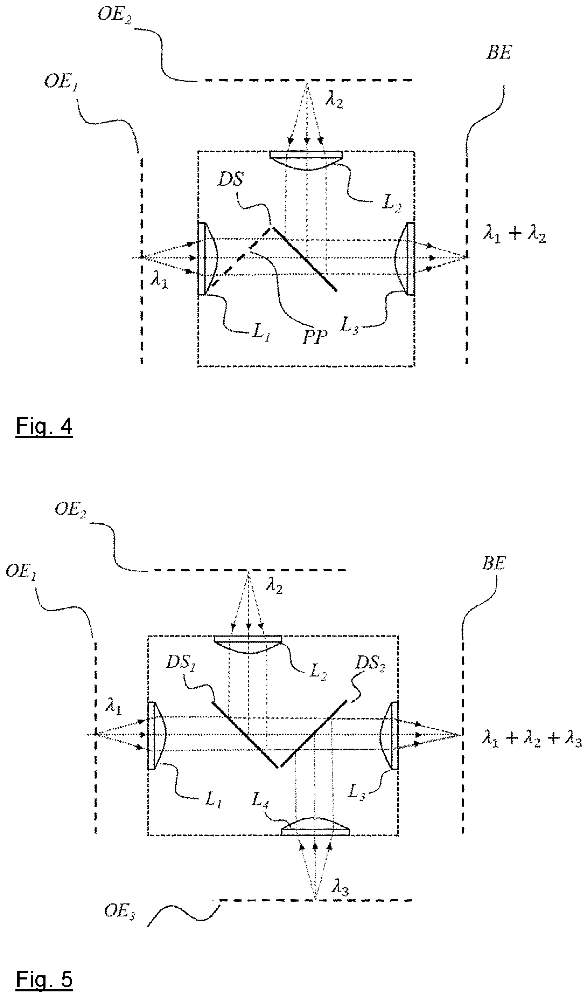

Bei der Ausgestaltung der Figuren 2 und 3 kann die mit dem Ablenkwinkel immer größer werdende Strahlhöhe auf den dichroitischen Spiegeln DSᵢ, dem Spiegel S und dem Objektiv O nachteilig sein, da diese den Ablenkwinkel der Ablenkeinheiten AEᵢ stark begrenzt. Um dieses Problem zu lösen, kann die Überlagerungsanordnung als multi-spektrale Relay-Optik (MSRO) ausgebildet werden, wie dies in den Figuren 4 bis 8 beispielhaft dargestellt ist. Bei einer derartigen Relay-Optik wird die Laserstrahlung aus den zwei oder mehr Objektebenen OEᵢ 1:1 in eine Bildebene BE abgebildet, wie dies in den Überlagerungsanordnungen der Fig. 4 für zwei Laserstrahlen und in Fig. 5 für drei Laserstrahlen dargestellt ist. Die MSRO kann zusätzlich über schräg gestellte, antireflexbeschichtete, planparallele Substrate PP verfügen, um den Strahlversatz beim Durchgang durch die dichroitischen Spiegel DS zu kompensieren. Ein derartiges planparalleles Substrat PP ist in Fig. 4 beispielhaft dargestellt.

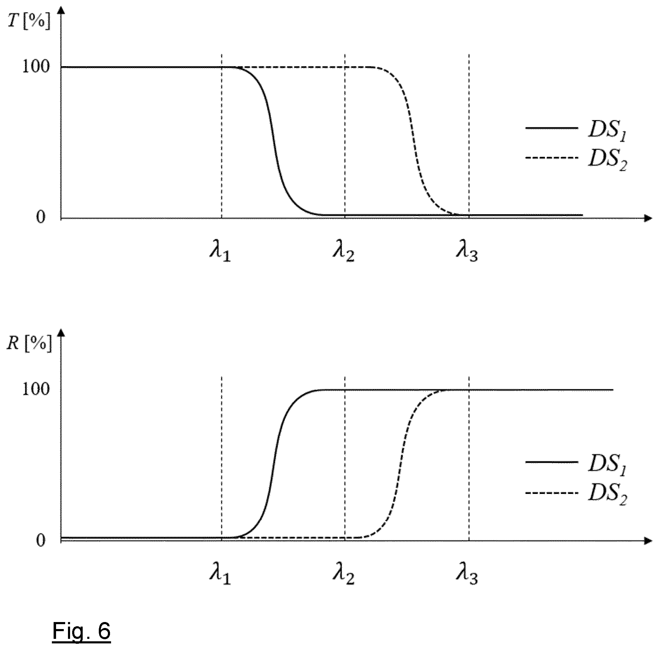

Fig. 6 zeigt beispielhaft die Charakteristik der in Fig. 5 eingesetzten dichroitischen Spiegel DS₁ und DS₂. Die Figur zeigt hierbei jeweils die Wellenlängen-abhängige Transmission sowie die Wellenlängen-abhängige Reflexion dieser Spiegel. Anhand des Kantenverlaufs der spektralen Durchlässigkeit bzw. spektralen Reflexion dieser Spiegel ist deutlich ersichtlich, dass sich Laserstrahlen mit den Zentralwellenlängen λ₁, λ₂ und λ₃ durch eine Kombination dieser Spiegel ohne nennenswerte Verluste überlagern lassen.

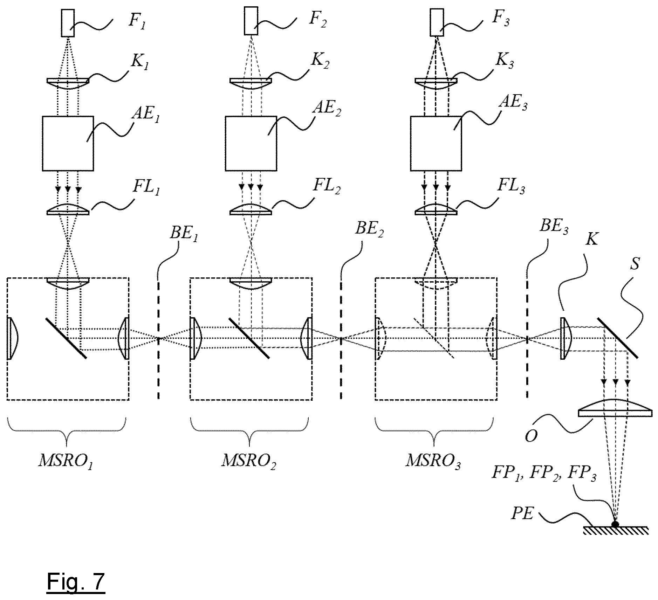

Ordnet man nun erfindungsgemäß mehrere MSROs so an, dass die Bildebene BE der einen MSRO in einer der Objektebenen OE der darauf folgenden MSRO liegt, so werden die durch Fokuslinsen FLᵢ erzeugten Zwischenfokuspunkte in der Bildebene der zweiten MSRO spektral überlagert. Eine Strahlüberlagerung von drei Strahlquellen mittels MSRO ist in der beispielhaften Ausgestaltung der vorgeschlagenen Vorrichtung in Fig. 7 dargestellt. Die Ablenkeinheiten AEᵢ befinden sich in dieser Darstellung in Nullposition. Ohne Strahlauslenkung wird die Strahlung der jeweiligen Strahlquelle wiederum in einen gemeinsamen Fokuspunkt FP = FP₁ = FP₂ = FP₃ in der Prozessebene PE abgebildet. Auch die Zwischenfokuspunkte liegen jeweils in den Bildebenen BEᵢ aufeinander.

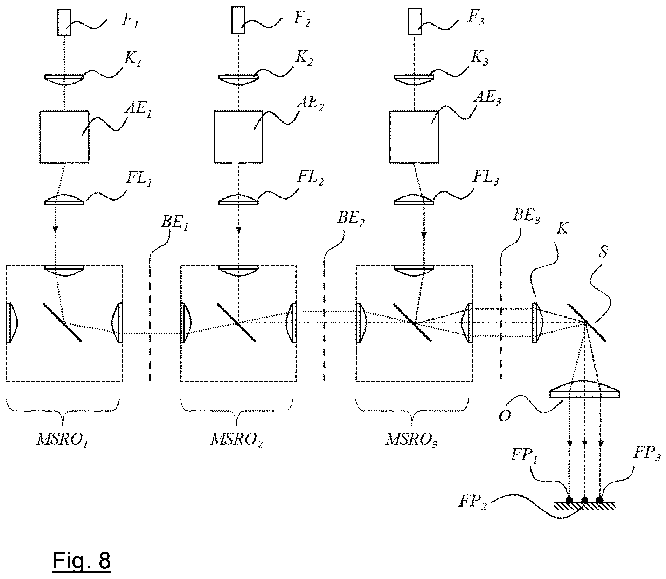

Wird die Laserstrahlung nun jeweils über die Ablenkeinheiten AEᵢ abgelenkt, so werden die Zwischenfokuspunkte ZFPᵢ in den Bildebenen BEᵢ und die Fokuspunkte FPᵢ in der Prozessebene PE entsprechend ausgelenkt. Diese Situation ist in Fig. 8 schematisch dargestellt. Fig. 10 zeigt hierzu die Lage der Zwischenfokuspunkte ZFPᵢ in den einzelnen Bildebenen BEᵢ (Fig. 10a - 10c))und die Lage der Fokuspunkte FPᵢ in der Prozessebene PE (Fig. 10d) schematisch in Draufsicht auf die jeweilige Ebene. Der Strahlverlauf ist in Fig. 8 lediglich anhand der jeweiligen optischen Achsen der Laserstrahlen dargestellt.

In einer weiteren Ausgestaltung einer Vorrichtung zur Lasermaterialbearbeitung werden die Laserstrahlen bereits vor dem Durchtritt durch die Ablenkeinheiten AEᵢ jeweils über Fokuslinsen FLᵢ vorfokussiert, nach Durchtritt durch die Ablenkeinheiten über die dichroitischen Spiegel DSᵢ überlagert und in die Prozessebene PE fokussiert, wie dies in Fig. 9 schematisch dargestellt ist.

### Bezugszeichenliste

- AA: Arbeitsabstand
- ABᵢ: Abtastbereich
- AEᵢ: Ablenkeinheit
- BE/BEᵢ: Bildebene
- DS/DSᵢ: dichroitischer Spiegel
- Fᵢ: Faser oder Faserlaser
- FLᵢ: Fokuslinse
- FPᵢ: Fokuspunkt
- Ki: Kollimator
- Lᵢ: Linse
- MSROᵢ: Multispektrale Relay-Optik
- O/Oᵢ: Objektiv
- OEᵢ: Objektebene
- PE: Prozessebene
- PP: Planparallele Platte
- S: Spiegel
- ZFPᵢ: Zwischenfokuspunkt

## Patentansprüche

1. Vorrichtung zur Abtastung einer Zielebene (PE) mit mehreren Laserstrahlen, insbesondere zur Lasermaterialbearbeitung, die zumindest
- wenigstens zwei Laserstrahlquellen (Fᵢ),
- für jede der Laserstrahlenquellen (Fᵢ) eine Ablenkeinrichtung (AEᵢ), die zur dynamischen ein- oder zweidimensionalen Ablenkung eines von der jeweiligen Laserstrahlquelle (Fᵢ) emittierten Laserstrahls ausgebildet ist,
- eine oder mehrere Fokussieroptiken (FLᵢ, O) zur Fokussierung der Laserstrahlen in die Zielebene (PE) und
- eine Überlagerungsanordnung zur Kombination der durch die Ablenkeinrichtungen (AEᵢ) propagierten Laserstrahlen aufweist,
wobei die Laserstrahlquellen (Fᵢ) so ausgebildet sind, dass die von den Laserstrahlquellen (Fᵢ) emittierten Laserstrahlen eine unterschiedliche Zentralwellenlänge aufweisen und die Überlagerungsanordnung einen oder mehrere auf die unterschiedlichen Zentralwellenlängen abgestimmte dichroitische Spiegel (DSᵢ) aufweist, durch die die Laserstrahlen kombiniert werden,
**dadurch gekennzeichnet,**
**dass** die Überlagerungsanordnung mehrere hintereinander angeordnete multispektrale Relay-Optiken (MSROᵢ) aufweist, die so angeordnet sind, dass für jedes Paar aufeinanderfolgender multispektraler Relay-Optiken (MSROᵢ) jeweils eine Bildebene (BE) einer multispektralen Relay-Optik (MSROᵢ) in einer Objektebene (OE) der darauf folgenden multispektralen Relay-Optik (MSROᵢ) liegt.

2. Vorrichtung nach Anspruch 1,
**dadurch gekennzeichnet,**
**dass** die Fokussieroptik (FSᵢ, O) durch ein allen Laserstrahlen gemeinsames F-Theta-Objektiv oder Mikroskop-Objektiv gebildet ist.

3. Vorrichtung nach Anspruch 1 oder 2,
**dadurch gekennzeichnet,**
**dass** für jeden Laserstrahl zwischen der Laserstrahlquelle (Fᵢ) und der Ablenkeinrichtung (AEᵢ) eine optische Anordnung (Kᵢ) zur Kollimierung angeordnet ist.

4. Vorrichtung nach Anspruch 1,
**dadurch gekennzeichnet,**
**dass** die Fokussieroptiken (FLᵢ, O) zwischen der Laserstrahlquelle (Fᵢ) und der Ablenkeinrichtung (AEᵢ) angeordnet sind.

5. Vorrichtung nach einem der Ansprüche 1 bis 4,
**dadurch gekennzeichnet,**
**dass** der eine oder die mehreren dichroitischen Spiegel (DSᵢ) als Kantenfilter ausgebildet sind.

6. Vorrichtung nach einem der Ansprüche 1 bis 5,
**dadurch gekennzeichnet,**
**dass** die unterschiedlichen Zentralwellenlängen einen Abstand von wenigstens 1 nm zueinander aufweisen.

7. Vorrichtung nach einem der Ansprüche 1 bis 6,
**dadurch gekennzeichnet,**
**dass** die Überlagerungsanordnung so ausgebildet ist, dass sie die Laserstrahlen in einer Stellung der jeweiligen Ablenkeinrichtungen (AEᵢ) vollständig überlagert.

## Claims

1. Device for scanning a target surface (PE) with multiple laser beams, in particular for laser material processing, including
- at least two laser beam sources (Fᵢ),
- for each of the laser beam sources (Fᵢ), a deflection device (AEᵢ) which is designed for dynamic one- or two-dimensional deflection of a laser beam emitted by the respective laser beam source (Fᵢ),
- one or more focusing optical units (FLᵢ, O) for focusing the laser beams into the target surface (PE), and
- a superposition arrangement for combining the laser beams that have propagated through the deflection devices (AEᵢ),
wherein the laser beam sources (Fᵢ) are designed such that the laser beams emitted by the laser beam sources (Fᵢ) have different central wavelengths, and the superposition arrangement includes one or more dichroic mirrors (DSᵢ) tuned to the different central wavelengths, by which the laser beams are combined,
**characterized in that**
the superposition arrangement includes several multispectral relay optical units (MSROᵢ) arranged one behind the other, which are arranged in such manner that for each pair of consecutive multispectral relay optical units (MSROᵢ) an image plane (BE) of a multispectral relay optical unit (MSROᵢ) lies in an object plane (OE) of the following multispectral relay optical unit (MSROᵢ).

2. Device according to Claim 1, **characterized in that** the focusing optical unit (FSᵢ, O) is formed by a F-theta lens or microscope lens shared by all laser beams.

3. Device according to Claim 1 or 2, **characterized in that** an optical arrangement (Kᵢ) for collimation is arranged between the laser beam source (Fᵢ) and the deflection device (AEᵢ) for each laser beam.

4. Device according to Claim 1, **characterized in that** the focusing optical units (FLᵢ, O) are arranged between the laser beam source (Fᵢ) and the deflection device (AEᵢ).

5. Device according to any one of Claims 1 to 4, **characterized in that** the one or more dichroic mirrors (DSᵢ) is/are embodied as (an) edge filter(s).

6. Device according to any one of Claims 1 to 5, **characterized in that** the different central wavelengths are separated from each other by a distance of at least 1 nm.

7. Device according to any one of Claims 1 to 6, **characterized in that** the superposition arrangement is designed such that it completely superposes the laser beams in one position of the respective deflection devices (AEᵢ).

## Revendications

1. Dispositif de balayage d'un plan cible (PE) avec plusieurs faisceaux laser, notamment pour l'usinage laser des matériaux, qui présente au moins
- au moins deux sources de faisceau laser (Fᵢ),
- un dispositif de déviation (AEᵢ) pour chacune des sources de faisceau laser (Fᵢ), qui est conçu pour la déviation dynamique unidimensionnelle ou bidimensionnelle d'un faisceau laser émis par la source de faisceau laser concernée (Fᵢ),
- une ou plusieurs optiques de focalisation (FLᵢ, O) pour focaliser les faisceaux laser dans le plan cible (PE), et
- un dispositif de superposition pour combiner les faisceaux laser propagés par les dispositifs de déviation (AEᵢ),
dans lequel les sources de faisceau laser (Fi) sont conçues de telle sorte que les faisceaux laser émis par les sources de faisceau laser (Fᵢ) présentent une longueur d'onde centrale différente et le dispositif de superposition présente un ou plusieurs miroirs dichroïques (DSᵢ) accordés sur les différentes longueurs d'onde centrales, permettant de combiner les faisceaux laser,
**caractérisé en ce que**
le dispositif de superposition présente plusieurs optiques relais multispectrales (MSROᵢ), qui sont disposées les unes derrière les autres, de telle sorte que, pour chaque paire d'optiques relais multispectrales (MSROᵢ) successives, un plan image (BE) d'une optique relais multispectrale (MSROᵢ) se trouve dans un plan d'objet (OE) de l'optique relais multispectrale (MSROᵢ) suivante.

2. Dispositif selon la revendication 1, **caractérisé en ce que** les optiques de focalisation (FSᵢ, O) sont constituées d'un objectif F-thêta ou d'un objectif de microscope commun à tous les faisceaux laser.

3. Dispositif selon la revendication 1 ou 2, **caractérisé en ce qu'**un dispositif optique (Kᵢ) de collimation est disposé pour chaque faisceau laser entre la source de faisceau laser (Fᵢ) et le dispositif de déviation (AEᵢ) .

4. Dispositif selon la revendication 1, **caractérisé en ce que** les optiques de focalisation (FLᵢ, O) sont disposées entre la source de faisceau laser (Fᵢ) et le dispositif de déviation (AEᵢ).

5. Dispositif selon une des revendications 1 à 4, **caractérisé en ce que** le ou les miroirs dichroïques (DSᵢ) sont conçus comme des filtres de bord.

6. Dispositif selon une des revendications 1 à 5, **caractérisé en ce que** les différentes longueurs d'onde centrales présentent un espacement d'au moins 1 nm les unes par rapport aux autres.

7. Dispositif selon une des revendications 1 à 6, **caractérisé en ce que** le dispositif de superposition est conçu de manière à superposer complètement les faisceaux laser dans une position des dispositifs de déviation respectifs (AEᵢ).
